# EUROPEAN PATENT APPLICATION

(11) **EP 4 653 653 A1**
(43) Date of publication of application: **26.11.2025**
(21) Application number: 25172511.5
(22) Date of filing: 25.04.2025
(51) Int. Cl.: E05F 15/43, E05F 15/73, H04N 23/611

(54) **DOOR CONTROLLER, VEHICLE, DOOR SYSTEM, AND RECORDING MEDIUM WITH PROGRAM RECORDED THEREIN**

(30) Priority: 23.05.2024 JP 2024084170
(71) Applicant: TOYOTA JIDOSHA KABUSHIKI KAISHA, Toyota-shi, Aichi-ken 471-8571 (JP)
(72) Inventor: YAMAZAKI, Masayuki, Toyota-shi, Aichi-ken,, 471-8571 (JP)
(74) Representative: Winter, Brandl - Partnerschaft mbB

(57) **Abstract**

A door controller including an electronic control unit (11) that controls opening and closing of a door (6) based on imaging-data is provided. The electronic control unit (11) is configured to recognize a user region including a user in a frame-image included in the imaging-data; extract an overlapping portion between the user region and an intrusion determination region adjacent to the openable and closable door (6); when a degree of overlapping of the overlapping portion relative to the intrusion determination region becomes equal to or higher than a predetermined degree, calculate a depth difference between the intrusion determination region and the overlapping portion in the frame-image; and when the depth difference is equal to or larger than a threshold value, determine that the user has intruded into the intrusion determination region.

## Description

### BACKGROUND OF THE INVENTION

### 1. Field of the Invention

The present invention relates to a door controller that controls opening and closing of a door, a vehicle, a door system, and a recording medium with a program recorded therein.

### 2. Description of Related Art

Japanese Unexamined Patent Application Publication No. 09-098412 (JP 09-098412 A) discloses a monitoring system that detects a distance to a target based on imaging-data imaged by a television camera. According to the technology, whether there is an intruding object is detected by comparing image information obtained by the television camera that images the target and background image information that has been imaged in advance. When an intruding object is detected, a depth of field is set to a shallow depth to perform focusing, and each time focusing is achieved, the distance to the intruding object is detected based on information on a focus position. According to the technology, a contour is detected by complementing a plurality of focus positions at a shallow depth of field to recognize the intruding object.

### SUMMARY OF THE INVENTION

The technology described in JP 09-098412 A cannot identify whether an intruding object is a person unless the entire intruding object enters the camera view, and therefore may have difficulty in determining whether a person has intruded in a state where part of the person has intruded into an imaging area.

The present invention provides a door controller that can determine whether a person has intruded based on imaging-data by machine learning, a vehicle, a door system, and a recording medium with a program recorded therein.

A first aspect of the present invention relates to a door controller including an electronic control unit (ECU) that controls opening and closing of a door based on imaging-data. The electronic control unit is configured to recognize a user region including a user in a frame-image included in the imaging-data. The electronic control unit is configured to extract an overlapping portion between the user region and an intrusion determination region adjacent to the door that is openable and closable. The electronic control unit is configured to, when a degree of overlapping of the overlapping portion relative to the intrusion determination region becomes equal to or higher than a predetermined degree, calculate a depth difference between the intrusion determination region and the overlapping portion in the frame-image. The electronic control unit is configured to, when the depth difference is equal to or larger than a threshold value, determine that the user has intruded into the intrusion determination region.

In the door controller of the first aspect of the present invention, the electronic control unit may be configured to, when the electronic control unit determines that the user has intruded into the intrusion determination region, control a driving unit that drives the door so as to restrict opening and closing actions of the door.

In the door controller of the first aspect of the present invention, the electronic control unit may be configured to calculate the depth difference using the frame-image in which the intrusion determination region in a state where the overlapping portion is not present is imaged as a reference frame, and based on a result of a comparison between the reference frame and the overlapping portion of which the degree of overlapping is equal to or higher than the predetermined degree.

In the door controller of the first aspect of the present invention, the electronic control unit may be configured to calculate the degree of overlapping of the overlapping portion having a rectangular shape in which the user region and the intrusion determination region set in a rectangular shape overlap, the user region having a rectangular shape and including the user.

A second aspect of the present invention relates to a vehicle including a door, a camera, and a door controller. The door is configured to be openable and closable. The camera is configured to generate imaging-data in which a region adjacent to the door is imaged. The door controller is configured to control the opening and closing of the door based on the imaging-data. The door controller is configured to recognize a user region including a user in a frame-image included in the imaging-data; extract an overlapping portion between the user region and an intrusion determination region adjacent to the door; when a degree of overlapping of the overlapping portion relative to the intrusion determination region becomes equal to or higher than a predetermined degree, calculate a depth difference between the intrusion determination region and the overlapping portion in the frame-image; and when the depth difference is equal to or larger than a threshold value, determine that the user has intruded into the intrusion determination region.

In the vehicle of the second aspect of the present invention, the intrusion determination region may be appropriately changeable according to an imaging range based on a mounting position of the camera.

A third aspect of the present invention relates to a door system including a door, a camera, and a door controller. The door is configured to be openable and closable. The camera is configured to generate imaging-data in which a region adjacent to the door is imaged. The door controller is configured to control the opening and closing of the door based on the imaging-data. The door controller is configured to recognize a user region including a user in a frame-image included in the imaging-data; extract an overlapping portion between the user region and an intrusion determination region adjacent to the door; when a degree of overlapping of the overlapping portion relative to the intrusion determination region becomes equal to or higher than a predetermined degree, calculate a depth difference between the intrusion determination region and the overlapping portion in the frame-image; and when the depth difference is equal to or larger than a threshold value, determine that the user has intruded into the intrusion determination region.

A fourth aspect of the present invention relates to a computer-readable recording medium in which a program that executes a process based on imaging-data is recorded. The recording medium is incorporated in a door controller that controls opening and closing of a door. The process includes (i) recognizing a user region including a user in a frame-image included in the imaging-data; (ii) extracting an overlapping portion between the user region and an intrusion determination region adjacent to the door that is openable and closable; (iii) when a degree of overlapping of the overlapping portion relative to the intrusion determination region becomes equal to or higher than a predetermined degree, calculating a depth difference between the intrusion determination region and the overlapping portion in the frame-image; and (iv) when the depth difference is equal to or larger than a threshold value, determining that the user has intruded into the intrusion determination region.

The door controller, the vehicle, the door system, and the recording medium with a program recorded therein of the present invention make it possible to determine whether a person has intruded based on imaging-data by machine learning.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing the configuration of a vehicle according to an embodiment of the present invention;
FIG. 2 is a view for describing imaging ranges of the internal camera and the external camera shown in FIG. 1;
FIG. 3 is a view showing a method of recognizing a user based on imaging-data of the internal camera;
FIG. 4 is a view showing an overlapping portion between a user region and an intrusion determination region based on the imaging-data of the internal camera;
FIG. 5 is a view showing a method of recognizing a user based on imaging-data of the external camera;
FIG. 6 is a view showing an overlapping portion between a user region and an intrusion determination region based on the imaging-data of the external camera; and
FIG. 7 is a flowchart showing a flow of a process of a door control method that is executed in the door controller shown in FIG. 1.

### DETAILED DESCRIPTION OF EMBODIMENTS

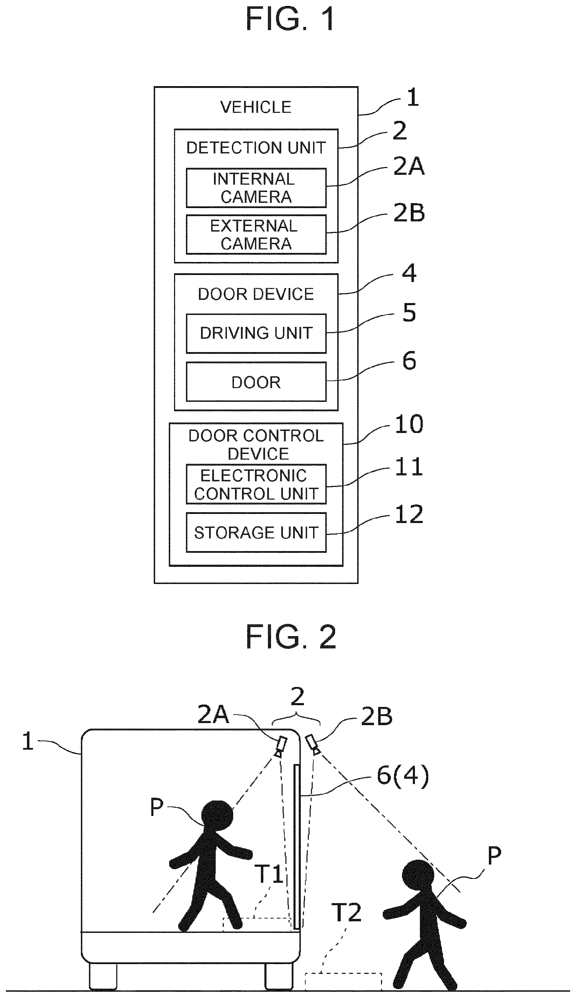

As shown in FIG. 1 and FIG. 2, a vehicle 1 includes a door device 4 that is automatically openable and closable. The vehicle 1 includes a door controller 10 that controls the door device 4. The vehicle 1 includes a detection unit 2 that detects a detection value for controlling the door device 4. The vehicle 1 is, for example, a bus vehicle that transports users. The vehicle 1 may be a self driving vehicle or may be a manually driven vehicle. The detection unit 2, the door device 4, and the door controller 10 compose a door system.

The detection unit 2 is composed of an internal camera 2A that generates imaging-data in which a vehicle interior is imaged, and an external camera 2B that generates imaging-data in which a vehicle exterior is imaged. The detection unit 2 outputs the imaging-data to the door controller 10. The internal camera 2A is provided inside the vehicle 1, at a position from which an intrusion determination region T1 adjacent to the door device 4 can be imaged. The internal camera 2A is provided, for example, inside the vehicle 1, at a position that is high relative to a user and overlooks the intrusion determination region T1 adjacent to a door 6.

The detection unit 2 includes the external camera 2B that images, for example, the vehicle exterior. The external camera 2B images, for example, an outside of the vehicle 1. The external camera 2B is provided outside the vehicle 1, at a position from which an intrusion determination region T2 adjacent to the door device 4 can be imaged. The external camera 2B is provided, for example, outside the vehicle 1, at a position that is high relative to a user and overlooks the intrusion determination region T2 adjacent to the door 6.

The door device 4 includes, for example, the door 6 that is openable and closable. The door 6 opens and closes based on, for example, a sliding-type opening and closing mechanism. The door 6 may be one that opens and closes based on a folding-door-type opening and closing mechanism. The door 6 is driven to open and close by a driving unit 5. The driving unit 5 is an actuator having a mechanism that opens and closes the door 6. The driving unit 5 is controlled by the door controller 10.

The door controller 10 includes an electronic control unit 11 that controls the opening and closing of the door 6 based on a detection value detected by the detection unit 2. The electronic control unit 11 is formed by at least one hardware processor, such as a central processing unit (CPU). The door controller 10 includes a storage unit 12 that stores data and programs. The storage unit 12 is formed by a non-transitory storage medium, such as a hard disc drive (HDD) or a solid-state disc (SSD). In the storage unit 12, computer programs and data required for controlling the opening and closing of the door 6 are stored.

The electronic control unit 11 is configured to, for example, execute in advance machine learning, such as deep learning, using image data as teacher data so as to be able to recognize the contents of image data. The electronic control unit 11 is configured to be able to recognize an environment near the door 6 and a user present near the door 6 based on the imaging-data imaged by the detection unit 2. The electronic control unit 11 is configured to control the opening and closing of the door 6 when approach of a user to the door 6 is recognized.

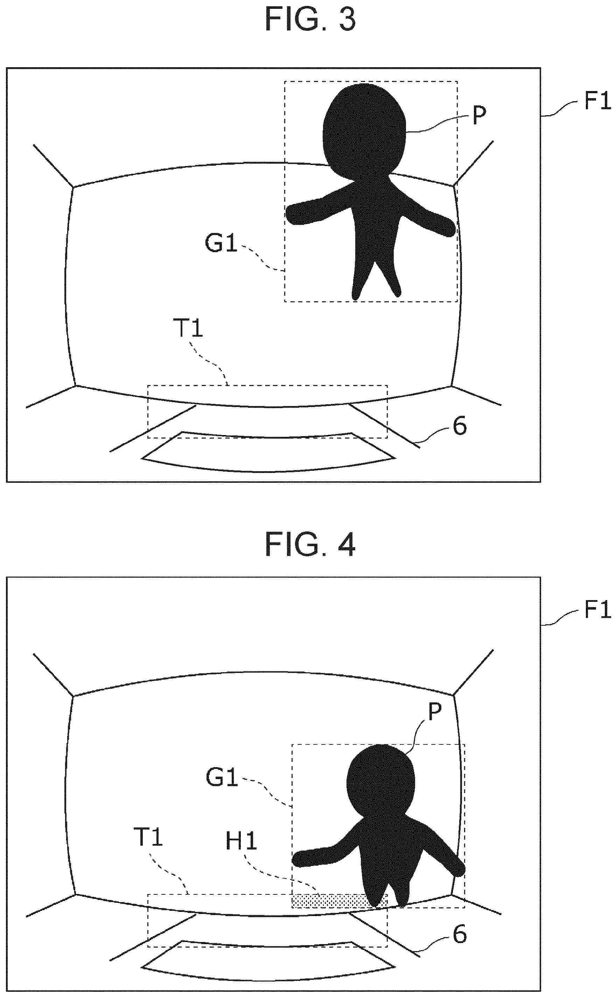

FIG. 3 shows a frame-image F1 included in the imaging-data imaged by the internal camera 2A. The imaging-data is moving image data including a plurality of frame-image s within a predetermined unit time based on a predetermined frame rate. The frame-image F1 includes a predetermined imaging range inside the vehicle 1. In the frame-image F1, for example, the door 6 and a boarding space for users including the door 6 are imaged.

The electronic control unit 11 performs an image analysis on the frame-image F1 and recognizes a predetermined region including the door 6. When the electronic control unit 11 recognizes the door 6, the electronic control unit 11 sets an intrusion determination region T1 in a region adjacent to the door 6. The intrusion determination region T1 is a region that is virtually set to determine intrusion of a user P. The intrusion determination region T1 is a rectangular region having a predetermined area, and may include part of the region of the door 6 or the entire region of the door 6. The intrusion determination region T1 may be appropriately changed according to an imaging range based on a mounting position of the internal camera 2A. The shape and the range of the intrusion determination region T1 may be appropriately changed as long as intrusion of a user P can be determined.

The electronic control unit 11 recognizes the frame-image F1 in a state where a user P is not present as a reference frame. The electronic control unit 11 stores, in the storage unit 12, an image including at least the intrusion determination region T1 in the state where a user P is not present as the reference frame. The electronic control unit 11 recognizes a user P present inside the frame-image F1 based on a result of a comparison between the reference frame and the frame-image F1. When the electronic control unit 11 recognizes a user P, the electronic control unit 11 sets a user region G1 including the user P. The user region G1 is a rectangular region that virtually surrounds the user P. The user region G1 is used in a calculation for determining whether a user P has intruded into the intrusion determination region T1. The user region G1 may be set to other shape as long as a user P can be determined.

As shown in FIG. 4, when the electronic control unit 11 recognizes the user region G1 including a user in the frame-image F1 included in the imaging-data, the electronic control unit 11 extracts an overlapping portion H1 between the intrusion determination region T1 and the user region G1. The electronic control unit 11 calculates a degree of overlapping of the overlapping portion H1 having a rectangular shape in which the user region G1 having a rectangular shape and including the user P and the intrusion determination region T1 set in a rectangular shape overlap. The degree of overlapping is calculated, for example, by an area ratio between the intrusion determination region T1 and the overlapping portion H1. The electronic control unit 11 compares the calculated degree of overlapping and a threshold value. When the degree of overlapping becomes equal to or higher than a predetermined degree, the electronic control unit 11 calculates a depth of the overlapping portion H1 in the frame-image F1.

The depth is a distance from the internal camera 2A to a target. That the degree of overlapping is equal to or higher than the predetermined degree does not necessarily mean that part of the body of the user P is included in the overlapping portion H1. Therefore, when the degree of overlapping becomes equal to or higher than the predetermined degree, the electronic control unit 11 calculates the depth of the overlapping portion H1 to determine whether part of the body of the user P is present in the overlapping portion H1.

The electronic control unit 11 analyzes the frame-image F1, for example, and estimates a depth of an object imaged inside the image. The electronic control unit 11 uses the frame-image F1 in which the intrusion determination region T1 in a state where an overlapping portion is not present is imaged as a reference frame. The electronic control unit 11 calculates a depth difference based on a result of a comparison between the intrusion determination region T1 in the reference frame and the overlapping portion H1. The electronic control unit 11 executes the depth estimation of the overlapping portion H1 using, for example, a common monocular depth estimation method based on RGB values of pixels of the image.

As the depth estimation method, any method may be used as long as the depth can be calculated based on an image. The depth estimation may calculate the depth based on not only monocular depth estimation but also a panorama image. The depth estimation may calculate the depth based on not only an image taken but also measurement data obtained by measuring a distance to a target.

The electronic control unit 11 estimates a depth of a target included inside the image based on, for example, the RGB values of the pixels of the frame-image F1, by determining that the target is closer when the R values of the pixels are larger and that the target is farther away when the R values are smaller. The electronic control unit 11 estimates, for example, a depth of the intrusion determination region T1 in the reference frame. The electronic control unit 11 estimates the depth of the overlapping portion H1 in the frame-image F1. The electronic control unit 11 compares the depth of the overlapping portion H1 and the depth of the intrusion determination region T1 in the reference frame, and when the depth difference between the depth of the overlapping portion H1 and the depth of the intrusion determination region T1 in the reference frame is equal to or larger than a threshold value, the electronic control unit 11 determines that the user P has intruded into the intrusion determination region T1.

Compared with a method that determines intrusion of a user P simply based on the degree of overlapping between the intrusion determination region T1 and the user region G1, comparing the depth of the overlapping portion H1 and the depth of the intrusion determination region T1 in the reference frame based on the frame-image F1 can improve the accuracy of determining intrusion of a user P.

When the electronic control unit 11 determines that the user P has intruded into the intrusion determination region T1, the electronic control unit 11 controls the driving unit 5 that drives the door 6 so as to restrict opening and closing actions of the door 6. When the electronic control unit 11 determines that a user P has intruded into the intrusion determination region T1, for example, while the door 6 is in the closing action, the electronic control unit 11 decelerates and stops the closing action of the door 6 and changes the closing action to the opening action to open the door 6. When the electronic control unit 11 determines that a user P has intruded into the intrusion determination region T1, for example, while the door 6 is in the opening action, the electronic control unit 11 reduces the speed of or stops the opening action of the door 6. The above-described control method of the door device 4 may be applied to a user P present outside the vehicle 1.

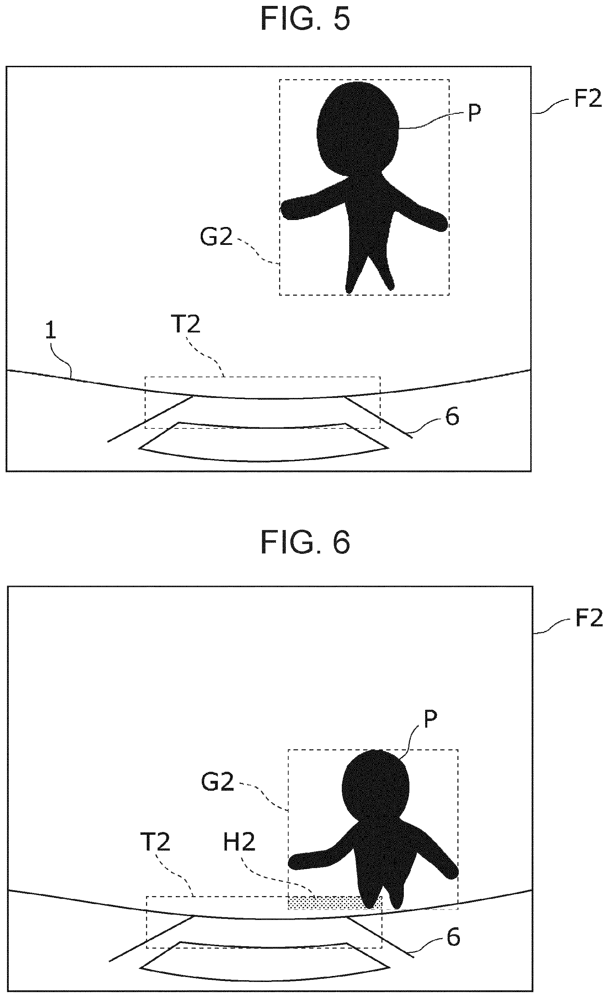

FIG. 5 shows a frame-image F2 included in the imaging-data imaged by the external camera 2B. In the following description, overlapping description of components of the same names as in the control method based on the internal camera 2A will be omitted as appropriate. In the frame-image F2, for example, the door 6 and an external space including the door 6 are imaged.

The electronic control unit 11 performs an image analysis on the frame-image F2 and recognizes a predetermined region including the door 6. When the electronic control unit 11 recognizes the door 6, the electronic control unit 11 sets the intrusion determination region T2 in a region adjacent to the door 6. The intrusion determination region T2 may be appropriately changed according to an imaging range based on a mounting position of the external camera 2B. The shape and the range of the intrusion determination region T2 may be appropriately changed as long as intrusion of a user P can be determined.

The electronic control unit 11 recognizes the frame-image F2 in a state where a user P is not present as a reference frame. The electronic control unit 11 recognizes a user P present inside the frame-image F2 based on a result of a comparison between the reference frame and the frame-image F2. When the electronic control unit 11 recognizes a user P, the electronic control unit 11 sets a user region G2 including the user P. The user region G2 may be set to other shape as long as a user P can be determined.

As shown in FIG. 6, when the electronic control unit 11 recognizes the user region G2 including a user in the frame-image F2 included in the imaging-data, the electronic control unit 11 extracts an overlapping portion H2 between the intrusion determination region T2 and the user region G2. The electronic control unit 11 calculates a degree of overlapping of the overlapping portion H2 having a rectangular shape in which the user region G2 having a rectangular shape and including the user P and the intrusion determination region T2 set in a rectangular shape overlap. The degree of overlapping is calculated, for example, by an area ratio between the intrusion determination region T2 and the overlapping portion H2. The electronic control unit 11 compares the calculated degree of overlapping and a threshold value. When the degree of overlapping becomes equal to or higher than a predetermined degree, the electronic control unit 11 calculates a depth of the overlapping portion H2 in the frame-image F2.

The electronic control unit 11 analyzes the frame-image F2, for example, and estimates a depth of an object imaged inside the image. The electronic control unit 11 uses the frame-image F2 in which the intrusion determination region T2 in a state where an overlapping portion is not present is imaged as a reference frame. The electronic control unit 11 calculates a depth difference based on a result of a comparison between the intrusion determination region T2 in the reference frame and the overlapping portion H2.

The electronic control unit 11 estimates a depth of a target included inside the image based on, for example, RGB values of pixels of the frame-image F2, by determining that the target is closer when the R values of the pixels are larger and that the target is farther away when the R values are smaller. The electronic control unit 11 estimates, for example, a depth of the intrusion determination region T2 in the reference frame. The electronic control unit 11 estimates the depth of the overlapping portion H2 in the frame-image F2. The electronic control unit 11 compares the depth of the overlapping portion H2 and the depth of the intrusion determination region T2 in the reference frame, and when the depth difference between the depth of the overlapping portion H2 and the depth of the intrusion determination region T2 in the reference frame is equal to or larger than a threshold value, the electronic control unit 11 determines that the user P has intruded into the intrusion determination region T2.

When the electronic control unit 11 determines that the user P has intruded into the intrusion determination region T2, the electronic control unit 11 controls the driving unit 5 that drives the door 6 so as to restrict the opening and closing actions of the door 6. When the electronic control unit 11 determines that a user P has intruded into the intrusion determination region T2, for example, while the door 6 is in the closing action, the electronic control unit 11 decelerates and stops the closing action of the door 6 and changes the closing action to the opening action to open the door 6. When the electronic control unit 11 determines that a user P has intruded into the intrusion determination region T2, for example, while the door 6 is in the opening action, the electronic control unit 11 reduces the speed of or stops the opening action of the door 6.

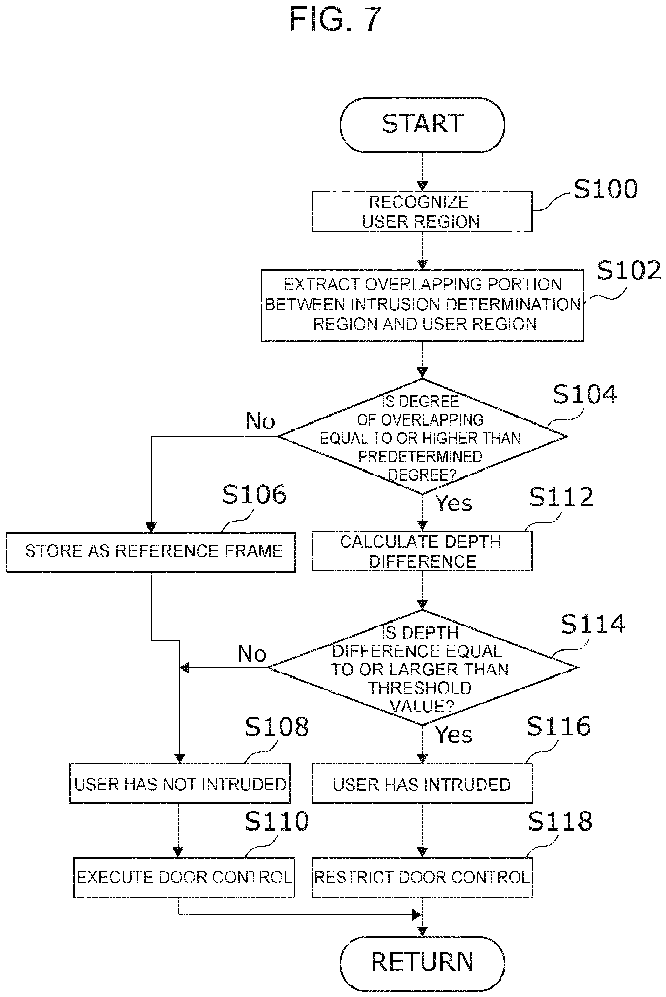

FIG. 7 shows a flow of a process of the door control method that is executed in the door controller 10. The door control method is executed based on a computer program installed in a computer that is incorporated in the door controller 10. The computer program makes the door controller 10 execute the following process.

The electronic control unit 11 recognizes the user region G1 including a user P and the intrusion determination region T1 from the frame-image based on the imaging-data acquired by the internal camera 2A (step S100). The electronic control unit 11 extracts an overlapping portion between the intrusion determination region T1 and the user region G1 (step S102). The electronic control unit 11 calculates the degree of overlapping of the overlapping portion relative to the intrusion determination region T1, and determines whether the degree of overlapping is equal to or higher than the predetermined degree (step S104).

When the degree of overlapping is lower than the predetermined degree, the electronic control unit 11 calculates the depth of the intrusion determination region T1 and saves the frame-image including the intrusion determination region T1 as a reference frame (step S106). The electronic control unit 11 determines that the user P has not intruded into the intrusion determination region T1 (step S108). The electronic control unit 11 executes the control of the door 6 without restriction (step S110). When the degree of overlapping is equal to or higher than the predetermined degree in step S104, the electronic control unit 11 calculates the depth difference between the depth of the overlapping portion H1 and the depth of the intrusion determination region T1 in the reference frame (step S112).

The electronic control unit 11 determines whether the depth difference is equal to or larger than the threshold value (step S114). When the depth difference is equal to or larger than the threshold value, the electronic control unit 11 determines that the user P has intruded into the intrusion determination region T1 (step S116). The electronic control unit 11 executes the opening and closing control of the door 6 with restriction (step S118). The electronic control unit 11 executes each of the above-described processes for each of the number of users P recognized. When the electronic control unit 11 determines that at least one user P has intruded into the intrusion determination region T1, the electronic control unit 11 restricts the opening and closing control of the door 6. Each of the above-described processes may be executed also for users P present outside the vehicle 1 based on the imaging-data imaged by the external camera 2B.

As has been described above, the door controller 10 can determine whether a user P has intruded into the intrusion determination regions T1, T2 adjacent to the door 6 based on the imaging-data by machine learning. By calculating not only the degrees of overlapping of the overlapping portions H1, H2 between the user regions G1, G2 and the intrusion determination regions T1, T2 but also the depth differences between the overlapping portions H1, H2 and the intrusion determination regions T1, T2, the door controller 10 can improve the accuracy of determining intrusion of a user P into the intrusion determination regions T1 T2. The door controller 10 can improve safety for users P in the opening and closing control of the door 6.

In the above-described embodiment, the computer program executed in each component of the door controller 10 may be provided in the form of being recorded in a computer-readable portable recording medium, such as a semiconductor memory, a magnetic recording medium, or an optical recording medium. The present invention is not limited to the embodiment described above and can be appropriately changed within such a range that no departure is made from the gist of the invention. For example, the door controller 10 may be applied to control of doors not only in the vehicle 1 but also in other than the vehicle 1.

## Claims

1. A door controller (10) comprising an electronic control unit (11) that controls opening and closing of a door (6) based on imaging-data, wherein:
the electronic control unit (11) is configured to recognize a user region (G1, G2) including a user (P) in a frame-image (F1, F2) included in the imaging-data;
the electronic control unit (11) is configured to extract an overlapping portion (H1, H2) between the user region (G1, G2) and an intrusion determination region (T1, T2) adjacent to the door (6) that is openable and closable;
the electronic control unit (11) is configured to, when a degree of overlapping of the overlapping portion (H1, H2) relative to the intrusion determination region (T1, T2) becomes equal to or higher than a predetermined degree, calculate a depth difference between the intrusion determination region (T1, T2) and the overlapping portion (H1, H2) in the frame-image (F1, F2); and
the electronic control unit (11) is configured to, when the depth difference is equal to or larger than a threshold value, determine that the user (P) has intruded into the intrusion determination region (T1, T2).

2. The door controller (10) according to claim 1, wherein the electronic control unit (11) is configured to, when the electronic control unit (11) determines that the user (P) has intruded into the intrusion determination region (T1, T2), control a driving unit that drives the door (6) so as to restrict opening and closing actions of the door (6).

3. The door controller (10) according to claim 1, wherein the electronic control unit (11) is configured to calculate the depth difference using the frame-image (F1, F2) in which the intrusion determination region (T1, T2) in a state where the overlapping portion (H1, H2) is not present is imaged as a reference frame, and based on a result of a comparison between the reference frame and the overlapping portion (H1, H2) of which the degree of overlapping is equal to or higher than the predetermined degree.

4. The door controller (10) according to claim 1, wherein the electronic control unit (11) is configured to calculate the degree of overlapping of the overlapping portion (H1, H2) having a rectangular shape in which the user region (G1, G2) and the intrusion determination region (T1, T2) set in a rectangular shape overlap, the user region (G1, G2) having the rectangular shape and including the user (P).

5. A vehicle (1) comprising:
a door (6) configured to be openable and closable;
a camera (2A, 2B) configured to generate imaging-data in which a region adjacent to the door (6) is imaged; and
a door controller (10) configured to control the opening and closing of the door (6) based on the imaging-data, wherein:
the door controller (10) is configured to recognize a user region (G1, G2) including a user (P) in a frame-image (F1, F2) included in the imaging-data;
the door controller (10) is configured to extract an overlapping portion (H1, H2) between the user region (G1, G2) and an intrusion determination region (T1, T2) adjacent to the door (6);
the door controller (10) is configured to, when a degree of overlapping of the overlapping portion (H1, H2) relative to the intrusion determination region (T1, T2) becomes equal to or higher than a predetermined degree, calculate a depth difference between the intrusion determination region (T1, T2) and the overlapping portion (H1, H2) in the frame-image (F1, F2); and
the door controller (10) is configured to, when the depth difference is equal to or larger than a threshold value, determine that the user (P) has intruded into the intrusion determination region (T1, T2).

6. The vehicle (1) according to claim 5, wherein the intrusion determination region (T1, T2) is appropriately changeable according to an imaging range based on a mounting position of the camera (2A, 2B).

7. A door system comprising:
a door (6) configured to be openable and closable;
a camera (2A, 2B) configured to generate imaging-data in which a region adjacent to the door (6) is imaged; and
a door controller (10) configured to control the opening and closing of the door (6) based on the imaging-data, wherein:
the door controller (10) is configured to recognize a user region (G1, G2) including a user (P) in a frame-image (F1, F2) included in the imaging-data;
the door controller (10) is configured to extract an overlapping portion (H1, H2) between the user region (G1, G2) and an intrusion determination region (T1, T2) adjacent to the door (6);
the door controller (10) is configured to, when a degree of overlapping of the overlapping portion (H1, H2) relative to the intrusion determination region (T1, T2) becomes equal to or higher than a predetermined degree, calculate a depth difference between the intrusion determination region (T1, T2) and the overlapping portion (H1, H2) in the frame-image (F1, F2); and
the door controller (10) is configured to, when the depth difference is equal to or larger than a threshold value, determine that the user (P) has intruded into the intrusion determination region (T1, T2).

8. A computer-readable recording medium that is incorporated in a door controller (10) that controls opening and closing of a door (6) based on imaging-data and in which a program that executes a process is recorded, the process comprising:
recognizing a user region (G1, G2) including a user (P) in a frame-image (F1, F2) included in the imaging-data;
extracting an overlapping portion (H1, H2) between the user region (G1, G2) and an intrusion determination region (T1, T2) adjacent to the door (6) that is openable and closable;
when a degree of overlapping of the overlapping portion (H1, H2) relative to the intrusion determination region (T1, T2) becomes equal to or higher than a predetermined degree, calculating a depth difference between the intrusion determination region (T1, T2) and the overlapping portion (H1, H2) in the frame-image (F1, F2); and
when the depth difference is equal to or larger than a threshold value, determining that the user (P) has intruded into the intrusion determination region (T1, T2).
